# EUROPÄISCHE PATENTSCHRIFT

(11) **EP 1 536 904 B1**
(45) Veröffentlichungstag und Bekanntmachung des Hinweises auf die Patenterteilung: **04.10.2006**
(21) Anmeldenummer: 03787621.6
(22) Anmeldetag: 02.07.2003
(51) Int. Cl.: B23B 29/034

(54) **SCHNEIDWERKZEUG FÜR DIE SPANABHEBENDE BEARBEITUNG**
CUTTING TOOL FOR METAL REMOVAL
OUTIL DE COUPE CONCU POUR EFFECTUER UN USINAGE PAR ENLEVEMENT DE COPEAUX

(30) Priorität: 26.07.2002 DE 10234030
(43) Veröffentlichungstag der Anmeldung: 08.06.2005
(73) Patentinhaber: Kennametal Widia Produktions GmbH & Co. KG, 45145 Essen (DE)
(72) Erfinder: RAAB, Dieter, 91586 Immeldorf (DE)
(74) Vertreter: Vomberg, Friedhelm
(86) Internationale Anmeldenummer: PCT/DE2003/002197
(87) Internationale Veröffentlichungsnummer: WO 2004/016379

(56) Entgegenhaltungen:
- DE-A- 2 112 689
- DE-A- 3 026 513
- US-A- 3 236 125
- US-A- 3 339 257

## Beschreibung

Die Erfindung betrifft ein Schneidwerkzeug für die spanabhebende Bearbeitung, mit einem um eine Achse drehbaren Werkzeuggrundhalter, der mindestens eine Ausnehmung für eine Kassette aufweist, die als Werkzeugträger für einen Schneideinsatz dient, und mit einer einen Exzenterzapfen und einen Stellkeil aufweisenden Verstelleinrichtung zur radialen Verschiebung der Kassette.

Ein solches Schneidwerkzeug wird in der US 3,236,125 beschrieben.

In der EP 0 739 258 B1 wird ein Fräser-Schneidwerkzeug mit einem Fräserkopf beschrieben, an dessen Stirnfläche mehrere Schneideinsätze angeordnet sind, die ihrerseits jeweils in einer Kassette befestigt sind. Jede der Kassetten ist in einer Nut in dem Fräserkopf angeordnet. Die Kassette besitzt eine Radialbohrung, in der ein Exzenterkörper anliegt, durch dessen Drehung die axiale Höhe der Kassette einstellbar ist. Nach Einstellung der axialen Höhe wird die Kassette durch Befestigungsschrauben am Werkzeugkopf fixiert.

Bei dem Fräserkopf nach der EP 0 697 933 B1 sind in jeweiligen vertieften Nuten der Umfangsfläche eine einen Schneideinsatz tragende Kassette und eine Abstandshalterplatte angeordnet. Die aneinanderliegenden Oberflächen der Kassette und der Abstandshalterplatte sind mit Zahnungen ausgebildet. Ferner ist in radialer Richtung ein Zapfen in einer Öffnung in der Bodenfläche der Nut eingesetzt, dessen Kopf exzentrisch in bezug auf den glatten zylindrischen Teil des Zapfens ist. Der exzentrische Kopf ist in einer Vertiefung oder einer Durchgangsnut auf der Rückseite der Kassette plaziert und mit einem Inbus versehen, um den Zapfen drehen zu können. Durch Drehung des Exzenters kann die Kassette axial eingestellt werden. Zur radialen Einstellung des Schneideinsatzes bzw. der Kassette wird eine in ein Gewindelochder Kassette eingeschraubte Schraube verwendet.

Es ist Aufgabe der vorliegenden Erfindung, bei einem Schneidwerkzeug der eingangs genannten Art eine zum Stand der Technik alternative Verstelleinrichtung zu schaffen, die leicht handhabbar ist, konstruktiv einfach aufgebaut ist und dennoch mit möglichst großer Präzision eine hinreichend exakte Radialverstellung der Kassette bzw. des hierauf befestigten Schneideinsatzes ermöglicht. Vorzugsweise soll diese Verstelleinrichtung auch für kleine Einbauräume nutzbar sein.

Diese Aufgabe wird durch das Schneidwerkzeug nach Anspruch 1 gelöst.

Erfindungsgemäß ist in einer Kassettenausnehmung ein Stellkeil angeordnet und in axialer Richtung mittels eines Exzenterzapfens verschiebbar. Durch die längsaxiale Bewegung des Stellkeiles innerhalb der Kassette wird die Kassette entsprechend dem durch den vorhandenen Keilwinkel bestimmten Hub gehoben oder gesenkt, womit sich der Radialabstand des Schneideinsatzes exakt festlegen läßt, etwa wenn ein Toleranzausgleich der dimensionsunterschiedlichen Schneideinsätze notwendig ist. Durch den Exzenter ist eine Radialverstellung der Kassette in beiden Richtungen, d.h. radial auswärts und radial einwärts ohne weitere Hilfsmittel möglich.

Vorzugsweise ist der Exzenterzapfen in einer Radialbohrung der Kassette geführt, so daß über eine Einsteckbohrung ein Inbusschlüssel oder ein ähnliches Werkzeug in eine Ausnehmung des Exzenterzapfens radial von außen gesteckt und der Exzenterzapfen betätigt werden kann. Hierzu weist der Exzenterzapfen eine exzentrisch angeordnete zylinderförmige Verlängerung auf, die in eine passende Ausnehmung des Stellkeiles eingreift, so daß bei einer Drehung des Exzenters der Stellkeil verschoben und damit die Schneidkante des Schneideinsatzes in radialer Richtung exakt eingestellt werden kann.

Nach einer weiteren Ausgestaltung ist die Kassette im Werkzeuggrundhalter mittels eines Flügelkeiles fixierbar, der über eine Schraube, vorzugsweise eine Doppelgewindeschraube in dem Werkzeuggrundhalter befestigbar ist, wobei der Flügelkeil im Spannzustand auf eine Kassettenfläche klemmend einwirkt. Dieser Flügelkeil dient dazu, die eingestellte Radial-Ausrichtung der Kassette und damit des Schneideinsatzes im Betrieb, d.h. bei der Durchführung der Zerspanungsoperationen, zu fixieren.

Um den Exzenterzapfen verliersicher in der Kassette zu haltern, ist eine Spannhülse gegen eine Verschiebung des Exzenterzapfens in radialer Richtung vorgesehen.

Der Keilwinkel des Stellkeiles liegt zwischen 8° und 12°, vorzugsweise bei 10°.

Weitere Ausgestaltungen des erfindungsgemäßen Schneidwerkzeuges sowie dessen Vorteile werden im folgenden anhand der Zeichnungen erörtert. Es zeigen
- Fig. 1: eine geschnittene Teilansicht einer Bohrstange mit einer montierten Kassette in einer Explosionsdarstellung,
- Fig. 2: eine perspektivische Ansicht der Kassette mit dem Stellkeil in einer Explosionsdarstellung,
- Fig. 3: eine perspektivische Ansicht der Bohrstange mit Flügelkeil in einer Explosionsdarstellung,

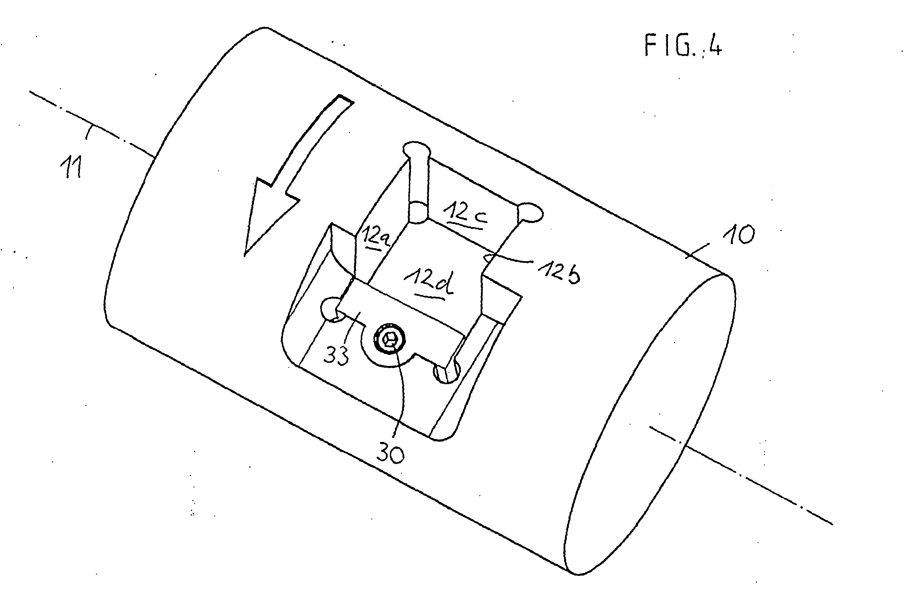

- Fig. 4: eine Darstellung der Bohrstange mit montiertem Flügelkeil (ohne Kassette) und
- Fig. 5, 6 und 7: jeweils verschiedene perspektivische Ansichten eines Kassetten-Schnittes.

Die vorliegende Erfindung wird anhand einer Bohrstange 10, die um die Drehachse 11 rotierbar ist, erläutert, läßt sich jedoch in entsprechender Weise bei jedem um eine Achse drehbaren Werkzeuggrundhalters verwenden. Die Bohrstange 10 als dargestellter Werkzeuggrundhalter besitzt eine Ausnehmung mit seitlichen Anlageflächen 12a, b und c sowie einer Aufstandsfläche 12d. In diese Ausnehmung ist eine Kassette 13 einsteckbar, die an ihrer Vorderfläche mittels eines Flügelkeiles 33 fixierbar ist. Die Kassette 13 trägt in einer Ausnehmung einen Schneideinsatz 14, der im vorliegenden Fall an einer Ecke einen Einsatz 15 aus einem polykristallinen Diamant trägt. Dieser Schneideinsatz wird mittels einer Spannschraube 16 in der Kassette befestigt.

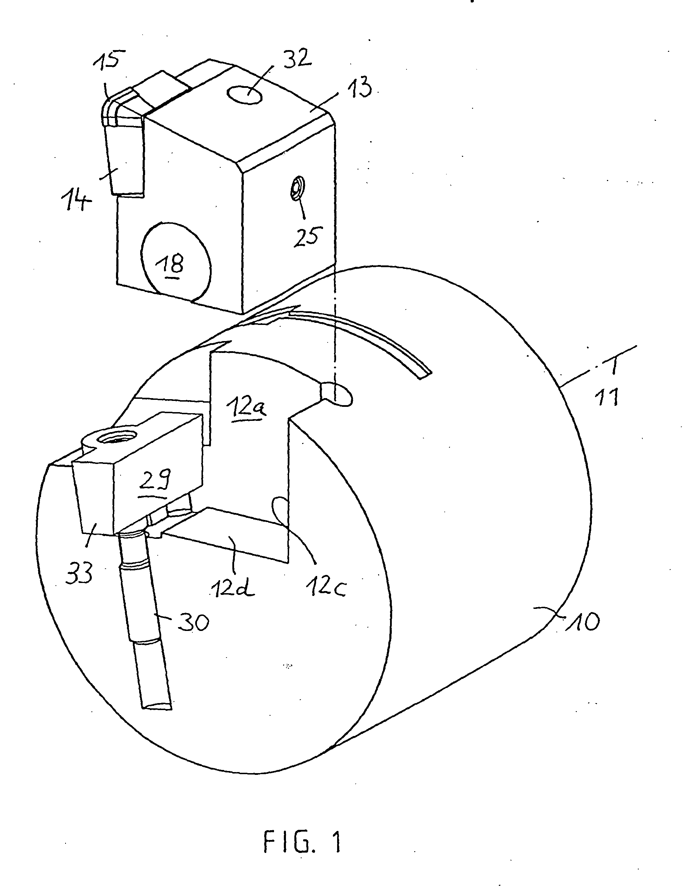

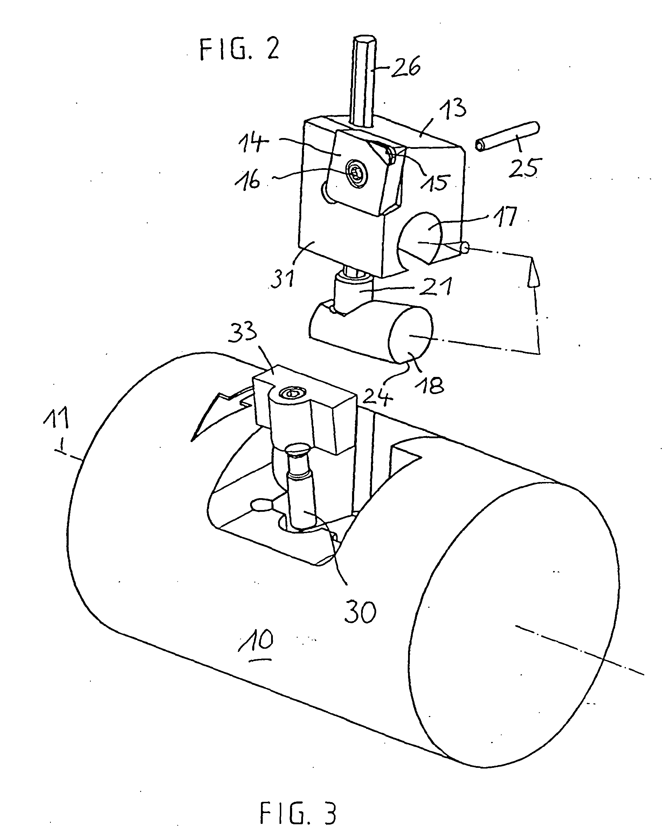

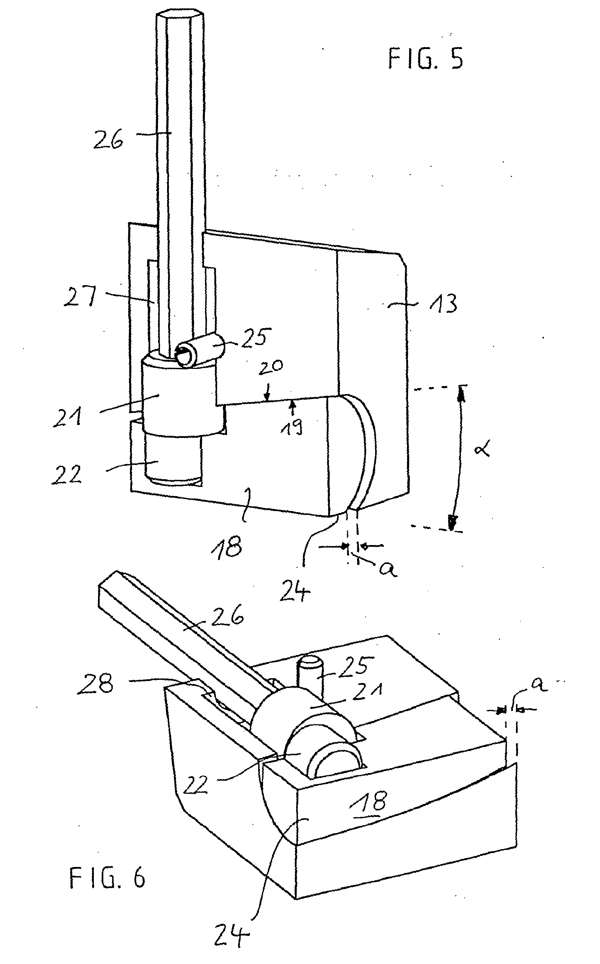

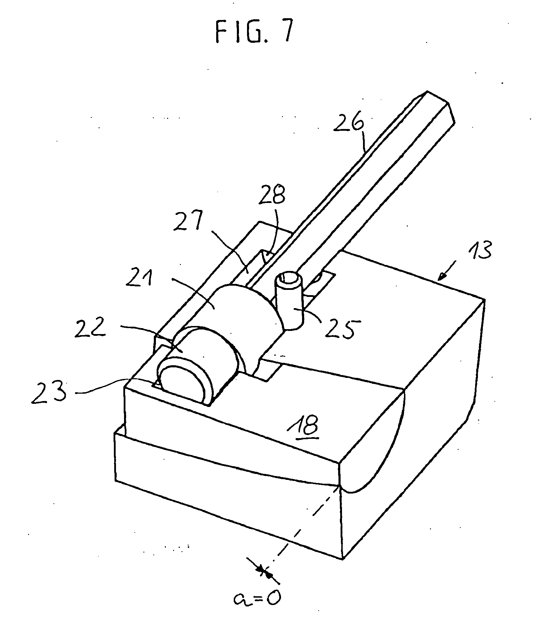

Wie im einzelnen aus den Fig. 1, 2 sowie 5 bis 7 ersichtlich ist, ist in einer längsaxial verlaufenden Ausnehmung 17 ein Stellkeil 18 angeordnet, der innerhalb der Ausnehmung 17 um ein Wegmaß a verschiebbar ist. Bei dieser längsaxialen Verschiebung gleiten die jeweiligen gekrümmten Mantelflächen 19 der Kassette 13 sowie der Bohrungsmantelfläche 20 des Stellkeiles 18 aufeinander, wobei mit einer Veränderung der Lage des Stellkeiles 18 zur Kassette 13 deren radiale Lage einstellbar ist. Fig. 6 und Fig. 7 zeigen die jeweils einstellbaren Endlagen der Kassette, wobei in Fig. 5 und 6 die größtmögliche Radial-Auswärtsverschiebung der Kassette und in Fig. 7 der im Minimum einstellbare Radialabstand dargestellt sind. Zur Axialverschiebung des Stellkeiles dient ein Exzenterzapfen 21, der in einer Radialbohrung der Kassette gelagert ist. Dieser Exzenterzapfen besitzt eine exzentrisch angeordnete zylinderförmige Verlängerung 22, die in ein Langloch 23 im Stellkeil 18 eingreift. Durch Drehung des Exzenterzapfens 21 verändert die zylinderförmige Verlängerung 22 ihre axiale Lage, wobei der Stellkeil 18 entsprechend der Lageänderung axial in der Kassette verschoben wird. Der Stellkeil 18 liegt mit seiner ebenen Fläche 24 auf der Aufstandsfläche 12d fest auf, wohingegen die Kassette 13 um einen Hub radial auswärts bewegt werden kann, der durch das Axialmaß a sowie den Keilwinkel α bestimmt ist. Fig. 5 und 6 zeigen jeweils Darstellungen, bei denen der maximale Kassettenhub durch die Axialverschiebung a erreicht ist. Beträgt das Maß a 0 (siehe Fig. 7), ist der minimale Hub der Kassette 13 eingestellt.

Zur Verliersicherung in radialer Richtung dient eine Spannhülse 25, die nach dem Zusammenbau der Kassette, des Stellkeiles und des Exzenterzapfens eingeschlagen wird.

Zur Betätigung des Exzenters 21 besitzt dieser eine Sechskantausnehmung, in die ein Inbusschlüssel 26 einsteckbar ist.

Zum Zusammenbau der in Fig. 1 dargestellten Kassette wird zunächst der Exzenterkörper 21 in die vorhandene Bohrung 27 bis zum durch die Ringfläche 28 vorgesehenen Anschlag eingeschoben. Anschließend wird der Stellkeil in die vorhandene angepaßte Ausnehmung der Kassette eingeführt, bis das Langloch 23 des Stellkeiles in Höhe der zylindrischen Verlängerung 22 liegt, wonach der Exzenterzapfen und das Zylinderteil nach unten in die in Fig. 5 bis 7 dargestellte Lage abgesenkt werden. Nach diesem Einfädeln wird die Spannhülse 25 eingeschlagen, welche die Kassette, den Spannteil sowie den Exzenter mit Verlängerung verliersicher arretiert. Die Kassette kann nun in die vorsehende Ausnehmung der Bohrstange abgesenkt und mittels des Flügelkeiles 33 befestigt werden, wobei die Flügelkeilfläche 29 durch Betätigung der Doppelgewindeschraube 30 zur Klemmung der Kassette über deren Vorderfläche 31 betätigt wird. Bei nur leichtem Klemmdruck über den Flügelkeil 33 wird die Radialeinstellung der Kassette und damit des Schneideinsatzes 14 bzw. dessen Schneidteil 15 vorgenommen. Bei vormontierter Kassette liegt der Stellkeil 18 auf der Aufstandsfläche 12d auf. Führt man über eine vorhandene Bohrung 32 einen Sechskantschraubendreher 26 ein und bringt man diesen mit einer entsprechenden Ausnehmung des Exzenterzapfens 21 in Eingriff, so kann durch Drehung des Exzenterzapfens und damit verbundener axialer Verschiebung des Zylinderzapfens 22 der Stellkeil 18 in axialer Richtung zwischen den Axialstellungen a = 0 (Fig. 7) und dem in Fig. 5 und 6 dargestellten Maß von a = 2 bis 3 mm verschoben werden. Über die aneinandergleitenden Mantelflächen 19 und 20 vollzieht die Kassette einen Radialhub, der eine radiale Feineinstellung im Sinne einer Ausrichtung der Schneidkante des Schneideinsatzes in radialer Richtung ermöglicht. Nach der optimalen radialen Einstellung der Kassette wird durch Betätigung der Doppelgewindeschraube 30 der Flügelkeil 33 abgesenkt und damit die Klemmung der Kassette 13 bewirkt.

Besonders vorteilhaft bei der erfindungsgemäßen Anordnung ist es, daß in leicht handhabbarer Weise die Radialverstellung der Kassette durch radiales Einführen des Sechskantschlüssels oder eines anderen Schraubendrehers 26 durchführbar ist.

## Patentansprüche

1. Schneidwerkzeug für die spanabhebende Bearbeitung, mit einem um eine Achse (11) drehbaren Werkzeuggrundhalter (10), der mindestens eine Ausnehmung für eine Kassette (13) aufweist, die als Werkzeugträger für einen Schneideinsatz (14) dient und mit einer einen Exzenterzapfen (21) und einen Stellkeil (18) aufweisenden Verstelleinrichtung zur radialen Verschiebung der Kassette (13),
**dadurch gekennzeichnet,**
**dass** der Stellkeil in einer Kassettenausnehmung (17) angeordnet ist, die den Stellkeil derart umgreift, dass dieser lediglich in axialer Richtung mittels des Exzenterzapfens (21) verschiebbar ist.

2. Schneidwerkzeug nach Anspruch 1, **dadurch gekennzeichnet, daß** der Exzenterzapfen (21) in einer Radialbohrung (27) der Kassette (13) geführt ist und eine exzentrisch angeordnete zylinderförmige Verlängerung (22) aufweist, die in ein Langloch (23) des Stellkeiles (18) eingreift.

3. Schneidwerkzeug nach Anspruch 1 oder 2, **dadurch gekennzeichnet, daß** die Kassette (13) im Werkzeuggrundhalter (10) mittels eines Flügelkeiles (33) fixierbar ist, der über eine Schraube, vorzugsweise eine Doppelgewindeschraube (30) in dem Werkzeuggrundhalter (10) befestigbar ist, wobei der Flügelkeil (33) im Spannzustand auf eine Kassettenfläche (31) klemmend einwirkt.

4. Schneidwerkzeug nach einem der Ansprüche 1 bis 3, **dadurch gekennzeichnet, daß** der Exzenterzapfen (21) mittels einer Spannhülse (25) gegen eine Verschiebung in radialer Richtung gesichert ist.

5. Schneidwerkzeug nach einem der Ansprüche 1 bis 4, **dadurch gekennzeichnet, daß** der Keilwinkel (α) des Stellkeiles (18) 10° ± 2° beträgt.

## Claims

1. Cutting tool for material-removing machining, provided with a basic tool holder (10) rotatable about an axis (11) and having at least one seat for a cartridge (13) that serves as tool holder for a cutting insert (14) and with an adjustment device having an eccentric pin (21) and an adjustment wedge (18) for radially shifting the cartridge (13),
**characterized in that**
a cartridge groove (17) holds an adjustment wedge (18) that encompasses the adjustment wedge such that the adjustment wedge is axially shiftable by means of an eccentric pin (21).

2. Cutting tool according to claim 1, **characterized in that** the eccentric pin (21) is set in a radial bore (27) of the cartridge (13) and has an eccentric cylindrical extension (22) that engages in a slot (23) of the adjustment wedge (18).

3. Cutting tool according to claim 1 or 2, **characterized in that** the cartridge (13) is retained in the tool holder (10) by a wing wedge (33) that can be locked in place by a screw, preferably a double-thread screw (30) in the tool holder (10), the wing wedge (33) bearing when tightened against a cartridge face (31).

4. Cutting tool according to one of claims 1 to 3, **characterized in that** the eccentric pin (21) is held by a retaining sleeve (25) against radial movement.

5. Cutting tool according to one of claims 1 to 4, **characterized in that** the wedge angle (α) of the adjustment wedge (18) is 10° ± 2°.

## Revendications

1. Outil de coupe pour l'usinage à enlèvement de copeaux, avec un porte-outil de base (10) tournant autour d'un axe (11) qui présente au moins un évidement pour une cassette (13) qui sert de support d'outil pour un insert de coupe (14), et avec un dispositif de réglage pour le déplacement radial de ladite cassette (13), ledit dispositif de réglage présentant une goupille excentrique (21) et un coin de réglage (18),
**caractérisé par le fait**
**que** ledit coin de réglage est disposé dans un évidement (17) de la cassette lequel embrasse le coin de réglage de telle manière que celui-ci peut être déplacé uniquement dans la direction axiale au moyen de la goupille excentrique (21).

2. Outil de coupe selon la revendication 1, **caractérisé par le fait que** ladite goupille excentrique (21) est guidée dans un trou radial (27) de la cassette (13) et présente une rallonge cylindrique (22) disposée excentriquement qui s'engage dans un trou oblong (23) dudit coin de réglage (18).

3. Outil de coupe selon la revendication 1 ou 2, **caractérisé par le fait que** la cassette (13) peut être fixée dans le porte-outil de base (10) au moyen d'un coin-papillon (33) qui peut être fixé par une vis, de préférence par une vis à double filet (30), dans le porte-outil de base (10), en état serré, ledit coin-papillon (33) agissant à serrage sur une face (31) de la cassette.

4. Outil de coupe selon l'une des revendications 1 à 3, **caractérisé par le fait que** la goupille excentrique (21) est immobilisée en translation radiale au moyen d'une douille de serrage (25).

5. Outil de coupe selon l'une des revendications 1 à 4, **caractérisé par le fait que** l'angle de coin (α) du coin de réglage (18) est de 10° ± 2°.
